# EUROPEAN PATENT APPLICATION

(11) **EP 1 930 805 A1**
(43) Date of publication of application: **11.06.2008**
(21) Application number: 07016380.3
(22) Date of filing: 21.08.2007
(51) Int. Cl.: G06F 3/12, H04N 1/00

(54) **Image processing apparatus, image processing system and image processing program**

(30) Priority: 04.12.2006 JP 2006327207
(71) Applicant: Fuji Xerox Co., Ltd., Minato-ku, Tokyo (JP)
(72) Inventor: Okada, Toshihiko, Kawasaki-shi Kanagawa (JP)
(74) Representative: Grünecker, Kinkeldey, Stockmair & Schwanhäusser Anwaltssozietät

(57) **Abstract**

An image processing apparatus includes:
an acceptance section that accepts a plurality of image data which are objects of image formation processing, and instruction description in which at least one instruction of image formation processing performed to the accepted image data, and instruction of at least one attendant processing to be performed accompanying the image formation processing are described;
an acquisition section that acquires setting information for representing setting of an image formation apparatus for executing the image formation processing;
an instruction generation section that generates at least one processing instruction based on the instruction description, the accepted image data, and the setting information, wherein the processing instruction is generated for image data to which same image formation processing and same attendant processing are to be performed; and
a sending section that sends the processing instruction to the image formation apparatus.

## Description

### BACKGROUND

### (i) Technical Field

This invention relates to an image processing apparatus, an image processing system and an image processing program.

### (ii) Related Art

In recent years, an image formation apparatus such as a printer including a processing section (for example, called post-processor, finisher, etc.,) for performing processing of folding a medium such as paper with an image formed thereon at the center, binding the medium with a stapler, etc., has been developed. JP-A-2003-276150 discloses an art for enabling the user to easily set control parameters fitted for processing steps of a workflow system for plate making processing.

However, to obtain any desired printed matter using such an image formation apparatus, the user needs to be familiar with the functions of the image formation apparatus and gives an image processing instruction; the image formation apparatus is low in convenience.

### SUMMARY

An object of the invention is to provide an image processing apparatus, an image processing system and a computer readable medium for image processing for making it possible to improve convenience.
(1) According to one aspect of the invention, there is provided an image processing apparatus including:
   an acceptance section that accepts a plurality of image data which are objects of image formation processing, and
   instruction description in which at least one instruction of image formation processing performed to the accepted image data, and instruction of at least one attendant processing to be performed accompanying the image formation processing are described;
   an acquisition section that acquires setting information for representing setting of an image formation apparatus for executing the image formation processing;
   an instruction generation section that generates at least one processing instruction based on the instruction description, the accepted image data, and the setting information, wherein the processing instruction is generated for image data to which same image formation processing and same attendant processing are to be performed; and
   a sending section that sends the processing instruction to the image formation apparatus.
(2) The image processing apparatus as described in item (1), wherein the acquisition section acquires the setting information from the image formation apparatus when the instruction generation section generates the processing instruction.
(3) The image processing apparatus as described in item (1) or (2), wherein the instruction generation section controls not to generate the processing instruction while at least a part of the plurality of image data is not accepted.
(4) The image processing apparatus as described in any one of items (1) to (3), further comprising a checking section that checks whether the processing instruction satisfies a condition for enabling the image formation processing, and outputs a result of the checking.
(5) According to an aspect of the invention, there is provided an image processing system including:
   an image formation apparatus that forms an image on a medium and processes the medium on which the image is formed;
   an output apparatus that outputs instruction description in which at least one instruction of image formation processing performed to image data which is an object of the image formation processing, and instruction of at least one attendant processing to be performed accompanying the image formation processing are described;
   an acceptance section that accepts the instruction description and the image data ;
   an acquisition section that acquires setting information for representing setting of the image formation apparatus;
   an instruction generation section that generates at least one processing instruction based on the instruction description, the accepted image data, and the setting information, wherein the processing instruction is generated for image data to which same image formation processing and same attendant processing are to be performed; and
   a sending section that sends the processing instruction to the image formation apparatus,
   the image formation apparatus forming the image on the medium and processes the medium on which the image is formed, based on the processing instruction.
(6) The image processing system as described in item (7), wherein the image formation apparatus comprises a post-processor that performs the attendant processing to a medium on which an image of the image data is formed.
(7) The image processing system as described in item (5) or (6), wherein the acquisition section acquires the setting information from the image formation apparatus when the instruction generation section generates the processing instruction.
(8) The image processing system as described in any one of items (5) to (7), wherein the instruction generation section controls not to generate the processing instruction while at least a part of the plurality of image data is not accepted.
(9) The image processing system as described in any one of items (5) to (8), further comprising a checking section that checks whether the processing instruction satisfies a condition for enabling the image formation processing, and outputs a result of the checking.
(10) According to an aspect of the invention, there is provided an image processing program for causing a computer to perform a process for processing an image, the process including:
   accepting a plurality of image data which are objects of image formation processing, and instruction description in which at least one instruction of image formation processing performed to the accepted image data, and instruction of at least one attendant processing to be performed accompanying the image formation processing are described;
   acquiring setting information for representing setting of an image formation apparatus for executing the image formation processing;
   generating at least one processing instruction based on the instruction description, the accepted image data, and the setting information, wherein the processing instruction is generated for the image data to which same image formation processing and same attendant processing are to be performed; and
   sending the processing instruction to the image formation apparatus.

### BRIEF DESCRIPTION OF THE DRAWINGS

Exemplary embodiments of the present invention will be described in detail based on the following figures, wherein:
FIG. 1 is a block diagram to show a configuration example and a connection example of an image processing apparatus according to an exemplary embodiment of the invention;
FIG. 2 is a functional block diagram to show an example of the image processing apparatus according to the embodiment of the invention;
FIG. 3 is a schematic representation to show a content example of a database used to create an image formation instruction in the image processing apparatus according to the embodiment of the invention; and
FIG. 4 is a schematic representation to show an example of an image formation instruction generated by the image processing apparatus according to the embodiment of the invention.

### DETAILED DESCRIPTION

According to an exemplary embodiment of the invention, processing unit information is generated for each image information for which common processing is performed based on the setting of the image formation apparatus and the information describing the instruction involved in image formation and the image formation instruction about the processing unit information is generated, so that the work burden on the user can be lightened and convenience can be improved as compared with the case where the configuration is not included.

According to an exemplary embodiment of the invention, the situation of the image formation apparatus at the point in time of image formation is acquired, so that if initialization is changed, the change in the initialization can be reflected on the image formation instruction.

According to an exemplary embodiment of the invention, processing is placed in a standby mode until image information relating to processing is accumulated, so that error occasions can be decreased and convenience can be more improved as compared with the case where the configuration is not included.

According to an exemplary embodiment of the invention, check is executed, so that an occasion where processing is checked for validity can be obtained and convenience can be more improved as compared with the case where the configuration is not included.

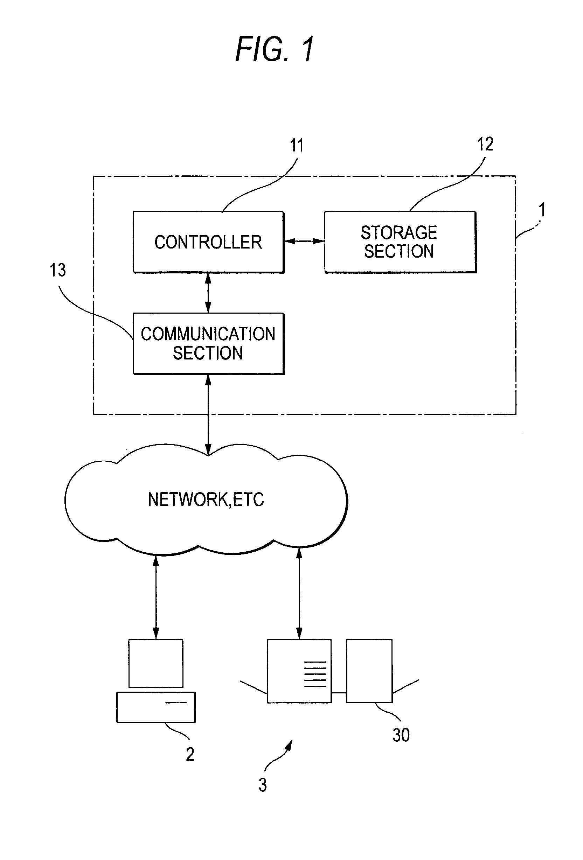

Referring now to the accompanying drawings, there is shown an exemplary embodiment of the invention. An image processing apparatus 1 according to the embodiment of the invention is connected to a client apparatus 2 and an image formation apparatus 3, as shown in FIG. 1. The image processing apparatus 1 includes a controller 11, a storage section 12, and a communication section 13. The image formation apparatus 3 includes a post-processor (finisher) 30.

The controller 11 is a program controllable device such as a CPU and may operate in accordance with a program stored in the storage section 12. The program may be provided in a state in which it is stored on a computer readable medium (e. g. , a record medium such as a CD-ROM or a DVD-ROM) and may be copied into the storage section 12. It may be provided in data signal through communication means of the Internet (i.e., a wave carrier), etc.

The controller 11 of the embodiment accepts information describing an image formation processing instruction, etc., and performs processing of generating and outputting an image formation instruction while referencing the current situation of the image formation apparatus 3. A specific processing example of the controller 11 is described later in detail.

The storage section 12 includes a memory such as RAM (Random Access Memory) , a hard disk, etc. The storage section 12 retains the program executed by the controller11. It also operates as work memory of the controller 11. The communication section 13 is communication means of a network interface, etc., for example, and transfers information to and from the client apparatus 2 and the image formation apparatus 3. The communication section 13 outputs received information to the controller 11.

In the embodiment, the image formation apparatus 3 is caused to process at least one piece of image information to which image formation processing is applied. The image information is associated with attendant information involved in image formation processing. The image information is classified into groups for each image information common in image formation processing and attendant processing.

For a book subjected to case binding, image information of a cover and image information to be contained in the main body exist by way of example. For case binding, sheets of paper on which the image information to be contained in the main body is printed are pasted on the back. The pasted paper sheets of the main body are wrapped up in the paper sheet on which the image information of a cover is printed. Therefore, for the case binding, the cover and the main body are printed on paper sheets different in paper quality and in addition, the main body needs to be pasted and the cover portion needs to wrap the main body and needs to be press molded. Examples of the attendant processing include the case binding processing including the pasting and wrapping.

In recent years, a finisher for performing the case binding processing has been developed, but the main body and the cover portion need to be output as distinguished from each other.

Then, the image information of the portion to be the main body needs to be printed out on paper of the same paper quality if it is made up of different types of image information pieces of a text portion and an illustration portion, for example; on the other hand, if the image information of the cover portion is received together with the image information of the main body, it needs to be handled as distinguished from the image information of the main body.

In recent years, an information description method for describing such an image formation procedure has been available (such as JDF (Job Definition Format) for defining printed matter manufacturing steps). In the description to follow, it is assumed that instruction description information containing information for identifying image information to which image formation processing is applied and an instruction of attendant processing to be performed accompanying the image formation processing involved in the image information is described in the JDF.

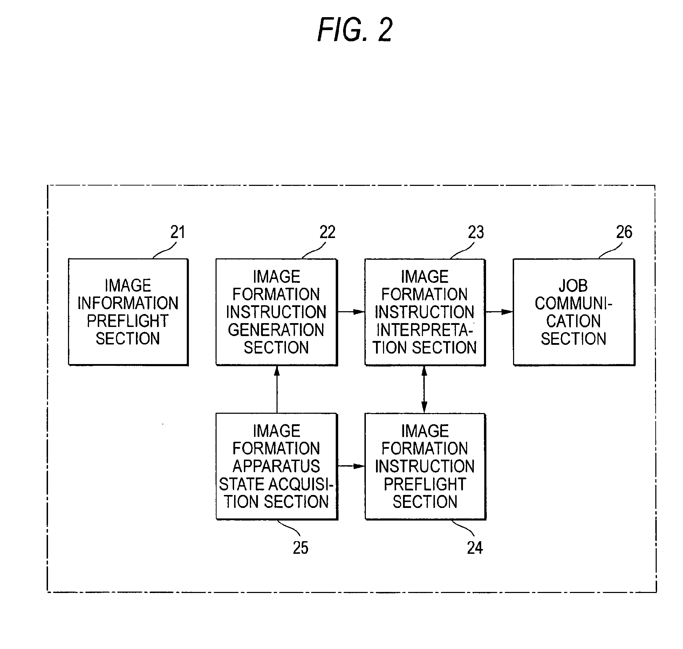

In the embodiment, the control section 11 is functionally made up of an image information preflight section 21, an image formation instruction generation section 22, an image formation instruction interpretation section 23, an image formation instruction preflight section 24, an image formation apparatus state acquisition section 25, and a job communication section 26, as shown in FIG. 2.

The image information preflight section 21 determines whether or not image information received from the client apparatus 2 is in a format fitted for print. For example, it checks whether or not the color space of the image information is cyan (C), magenta (M), yellow (Y), black (K), etc. When the image information preflight section 21 determines that the image information is not in a format fitted for print, it informs the client apparatus 2 of the fact.

The image formation instruction generation section 22 generates at least one image formation instruction (processing unit information) containing common image information in image formation processing and attendant processing based on the image information and the instruction description information received from the client apparatus 2 and information representing setting of the image processing apparatus acquired by the image formation apparatus state acquisition section 25 (described later).

As a specific example, the instruction description information described in the JDF is as
<projectname> 2006 fiscal year report
<copies> 100
<option> check,print
<finishing> case binding
<cover>
<stock> binding paper specification
<contents:001> Covers.ai
<bodies>
<stock> ordinary paper
<contents:002> Body.doc
<contents:003> Appendix.xls

Here, <projectname> is title information to identify the instruction description information. <copies> is specification of the number of print copies; in the example, printing of 1000 copies is specified.

<option> is the type of processing to be executed; here it represents check and print. In addition, the specification of the processing type includes specification of always printing the first page of each image information piece from the front side of paper if a plurality of pieces of image information to be formed exist (namely, if the document to be inserted just before is made up of an odd number of pages and double-sided printing is applied, the back of paper of the last page of the just before inserted document is blank) (Chapter-Start), etc.

<finishing> is specification of finishing; for example, specification of a binding method, a bookbinding method, etc., is described. <cover> means an image formation instruction of a cover when case binding is specified; in the example, it is an instruction of printing on paper represented in <stock> (bind paper) based on image information represented by <contents:nnn> (nnn is identification number) (here, information of file name of Covers.ai).

<bodies> means an image formation instruction of a main body portion in case binding; in the example, it is an instruction of printing on paper represented in <stock> (ordinary paper) based on image information represented by <contents:nnn> (nnn is identification number) (here, information of file name of Body.doc and information of file name of Appendix.xls).

The image formation instruction generation section 22 references the <finishing> tag for specifying finishing. In the finishing specification, processing for the image formation medium is specified. The finishing specification includes specification of a binding method, a bookbinding method, etc., such as "case binding, " "saddle stitch binding, " or "side stitch binding."

The image formation instruction generation section 22 requests the image formation apparatus state acquisition section 25 (described later) to acquire information concerning the image formation apparatus 3. It acquires the processing condition in the post-processor 30 for executing the specified binding method and bookbinding, such as information of the model of the post-processor 30 included in the image formation apparatus 3, from the image formation apparatus state acquisition section 25.

For example, one type of case binder requires that paper on which a cover image is formed should be manually set on a cover stacker. Then, in the embodiment, processing to be executed in response to each type of binder such as job adjustment or instruction output to a worker is predetermined and is retained in the storage section 12 as a corresponding processing database so that bookbinding can be executed smoothly in each type of binder.

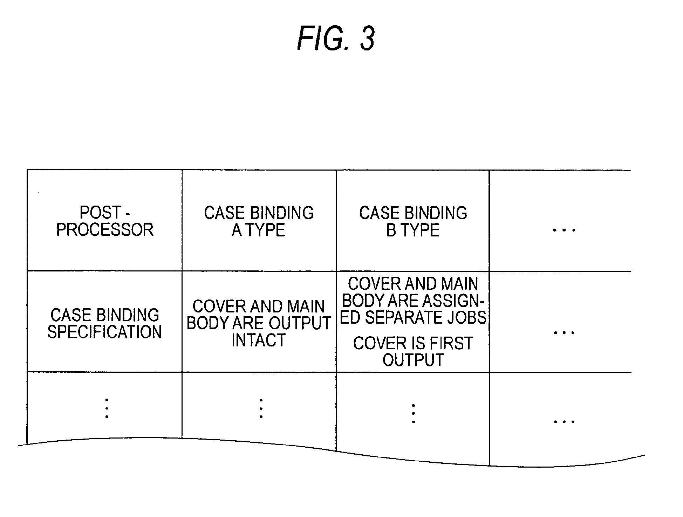

The corresponding processing database associates information indicating what processing is to be performed corresponding to the specified post-processing for each of post-processors that can be installed in the image formation apparatus 3, for example, as conceptually shown in FIG. 3. By way of example, when a case binder requiring that paper on which a cover image is formed should be manually set on a cover stacker is installed as the post-processor 30, if case binding is specified in the instruction description information,
(1) an instruction to generate image information of the main body and image information for the cover as distinguished from each other;
(2) an instruction to first output the image information for the cover;
(3) an instruction to perform printout processing of a message of "set on cover stacker of case binder" following the image information for the cover; and
(4) an instruction to output the image information of the main body
are described as processing conditions.

The image formation instruction generation section 22 generates a model of at least one image formation instruction from the instruction description information according to the acquired processing conditions. As a specific example, to execute "case binding," image information of a cover and at least one piece of image information to be contained in the main body are contained.

Thus, to use the case binder requiring that a cover image should be first formed and paper on which the cover image is formed should be manually set on a paper stacker as in the example, an image formation instruction as information for each processing unit is generated for each common image information in image formation processing and processing in a finisher, etc., of attendant processing.

That is, in the example, the image formation instruction generation section 22 generates models of two image formation instructions corresponding to an image formation instruction involved in forming a cover image and an image formation instruction involved in forming an image of the main body.

The image formation instruction generation section 22 contains the image information to be printed, specified in the command description information in the model of the image formation instruction to complete the image formation instruction. At this time, if not yet received image information exists in the image information specified in the command description information, the image formation instruction generation section 22 waits until reception of the not yet received image information (unreceived image information), and completes the image formation instruction.

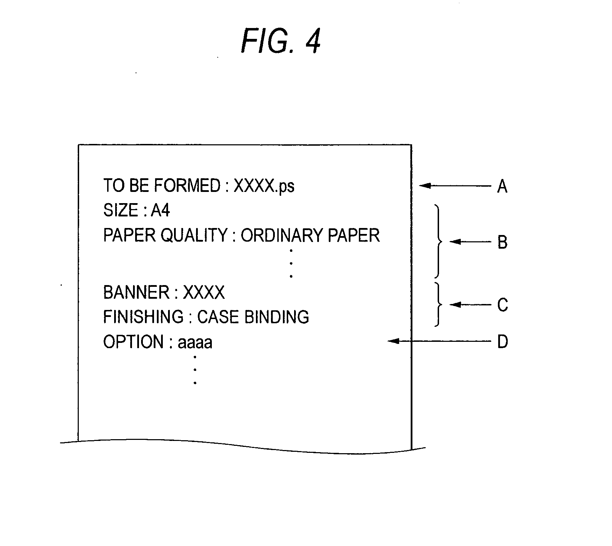

The image formation instruction thus generated by the image formation instruction generation section 22 contains paper specification of size, paper quality, etc., (B), banner (message) output, finishing specification, etc., (C), and information of the type of processing to be performed (corresponding to the information described as option: D) as well as information for identifying the image information to be formed (A), as shown in FIG. 4.

The image formation instruction generation section 22 outputs the generated image formation instruction to the image formation instruction interpretation section 23. In this embodiment, the image formation instruction generation section has a function to generate processing unit information and a function to generate image formation instruction. However, these functions can be performed by separate sections.

The image formation instruction interpretation section 23 controls the image formation apparatus 3 in accordance with the image formation instruction generated by the image formation instruction generation section 22. That is, the image formation instruction interpretation section 23 generates data that can be accepted by the image formation apparatus 3 (for example, bit map data) based on the image information to be formed (RIP processing).

If an image formation instruction involving a plurality of pieces of image information to be formed exists in the input image formation instructions, the image formation instruction interpretation section 23 combines the plurality of pieces of image information to be formed to generate one piece of image formation information (called combined information) and stores the combined information in the storage section 12. The information for identifying the plurality of pieces of image information contained in the image formation instruction may be replaced with information for identifying the combined information and RIP processing may be performed based on the combined information.

To generate the combined information, the image formation instruction interpretation section 23 references specification of the binding method, the processing type, etc., and makes setting as to which page of which image information is to be printed on which side of paper (imposition processing). For example, if a binding method of stapling one side of paper after print is specified, pages of the image information to be formed are successively allocated to the front side and the back side of paper in the specified order. If an imposition instruction of always placing the first page of image information on the front side of paper (Chapter-start) is given in the specification of the processing type, processing of inserting a page not containing any image (blank page), etc., as a back side image of paper containing the last page forming image information of an odd-numbered page (the last page is formed on the surface of paper) is performed.

For such imposition processing, well known processing can be adopted and therefore the imposition processing will not be discussed here in detail.

Further, the image formation instruction interpretation section 23 instructs the job communication section 26 to output the generated data after RIP to the image formation apparatus 3.

When check is specified as the processing type, the image formation instruction interpretation section 23 may output the input image formation instruction to the image formation instruction preflight section 24 and if the result information is "no problem" in the check result output by the image formation instruction preflight section 24, the image formation instruction interpretation section 23 may instruct the job communication section 26 to output the generated data after RIP to the image formation apparatus 3.

The image formation instruction preflight section 24 checks whether or not predetermined conditions are satisfied about the image formation instruction input from the image formation instruction interpretation section 23. For example, it checks whether or not settings of paper specification, finishing processing, etc., are settings that can be handled in the image formation apparatus 3 and checks whether or not the number of pages of image information and orientation of the original for each page match, etc. At this time, the image formation instruction preflight section 24 may receive input of information of the finisher installed in the image formation apparatus 3 and information of the type of set paper, etc. If the conditions are satisfied as a result of the checking, the image formation instruction preflight section 24 outputs information to the effect that the conditions are satisfied to the image formation instruction interpretation section 23.

If the conditions are not satisfied (if a problem exists), the problem may be transmitted to the client apparatus 2. The image formation instruction preflight section 24 may generate a preview image (a string of low-resolution images of the images formed on pages) based on the image formation instruction and may transmit the preview image to the client apparatus 2. In this case, if the check result does not involve any problem, the image formation instruction preflight section 24 may receive a message to the effect that the transmitted preview image has been checked from the client apparatus 2 before outputting information to the effect that the conditions are satisfied to the image formation instruction interpretation section 23.

The image formation apparatus state acquisition section 25 conducts communications with the image formation apparatus 3, for example, acquires information representing the model of the image formation apparatus 3, information of the finisher installed in the image formation apparatus 3, information of the type of paper set in the image formation apparatus 3 at present, etc., and outputs the acquired information to the image formation instruction generation section 22.

If information representing the model of the image formation apparatus 3, information of the finisher installed in the image formation apparatus 3, information of the type of paper set in the image formation apparatus 3 at present, etc., is previously recorded in the storage section 12, for example, without conducting communications with the image formation apparatus 3, the image formation apparatus state acquisition section 25 may read the information and output the information to the image formation instruction generation section 22.

The job communication section 26 transmits the data after RIP to the image formation apparatus 3 in accordance with the instruction from the image formation instruction interpretation section 23.

Operation examples of the image processing apparatus 1 of the embodiment will be discussed below:

### [Example 1]

The first example is an example wherein case binding is specified. It is assumed that the instruction description information is described as
<projectname> 2006 fiscal year report
<copies> 1000
<option> check,print
<finishing> case binding
<cover>
<stock> binding paper specification
<contents:001> Covers.ai
<bodies>
<stock> ordinary paper
<contents:002> Body.doc
<contents:003> Appendix.xls

Upon reception of the instruction description information, the image processing apparatus 1 of the embodiment waits until reception of image information specified in

### <contents>.

When the image information specified in <contents> is received, generation processing of image formation instruction is started. Here, it is assumed that the image information is information described in PostScript (registered trademark) of a page description language (a suffix of .ps is added to each file name).

The image processing apparatus 1 of the embodiment checks the finisher of the image formation apparatus 3. Here, it is assumed that a finisher requiring that a cover be separately printed before the main body and paper printing the cover be set for printing the main body is connected. The image processing apparatus 1 of the embodiment references predetermined conditions, divides the job into a job of the cover portion and a job of the main body portion, and generates two image formation instructions as processing corresponding to the finisher. That is, an image formation instruction of (1) image information to be formed: Covers.ai.ps
attendant processing instruction:
paper: A3 mileage, binding sheet
banner sheet: "Case binding cover output for 2006 fiscal year report"
finishing specification: None
is first generated.

In the main body portion, Body.doc.ps corresponding to Body.doc and Appendix.xls.ps corresponding to Appendix.xls are to be formed and therefore they are combined (in the example, Body.doc.ps is followed by pages of Appendix.xls.ps) to generate new combined information (for example, body.ps). Although not explicitly specified, it is assumed that an instruction of binding along a long side of A4 paper as double-sided printing for Body. doc. ps and binding along a short side of A4 paper as double-sided printing for Appendix.xls.ps is given.

In this case, as an image formation instruction, information of
(2) image information to be formed: body.ps
attendant processing instruction:
paper: A4 ordinary paper
cover: None
exception pages: Pages 1 to 84: Double-sided, long side binding
exception pages: Pages 85 to 92: Double-sided, short side binding
is generated. The expression "double-sided, long side binding" mentioned here is specification of double-sided printing and is not specification of binding processing. Specifically, it is specification of executing double-sided printing so that the tops and bottoms of the front and back images do not change when the front and the back of paper are inverted with one long side fixed. Likewise, the expression "double-sided, short side binding" is specification of executing double-sided printing so that the tops and bottoms of the front and back images do not change when the front and the back of paper are inverted with one short side fixed.

The image processing apparatus 1 of the embodiment executes predetermined preflight check on the image formation instructions, generates a preview image, and receives confirmation of the user and then outputs a signal for controlling the image formation apparatus 3 based on the image formation instruction corresponding to the job of the cover portion and the image formation instruction corresponding to the job of the main body portion.

### [Example 2]

As a second example, it is assumed that the instruction description information is described as
<projectname> external specification
<copies> 10000
<option> autoprint
<option> Chapter-Start
<finishing> A4, stapler two points
<Topcover>
<stock> coated paper
<contents:001> ApprovedCover.doc
<bodies>
<stock> woodfree paper
<contents:002> Body01.doc
<contents:003> Body02.doc
<contents:004> Body03.doc
<contents:005> Appendix.xls
<backCover>
<stock>coated paper
In this case, it is assumed that autoprint of <option> is specification of printing with no check.

The image processing apparatus 1 of the embodiment generates the following image formation instruction from the instruction description information:
Image to be formed: External specification.ps
attendant processing:
   paper: A4
   finisher: Double-sided, long side binding, stapler two points
   front cover: Coated paper
   exception pages: Pages 2 to 15: Woodfree paper, double-sided, long side binding
      page 16: Woodfree paper, one side
      pages 17 to 22: Woodfree paper, double-sided, long side binding
      pages 23 to 28: Woodfree paper, double-sided, long side binding
   back cover: no print, coated paper
Here, Body01.doc 15-page image information and each of Body02.doc and Body03.doc is six-page image information. Since Chapter-Start is specified, the image processing apparatus 1 of the embodiment generates the instruction so that single-sided printing is applied to the last page of Body01.doc containing only 15 pages so that the top page of each image information is printed on the front side of paper.

The image processing apparatus 1 of the embodiment controls the image formation apparatus 3 based on the thus generated image formation instruction without making any check.

### [Modified example]

The image processing apparatus 1 of the embodiment may accept direct correction to the generated image formation instruction from the user. For example, to execute Z folding (finisher processing of folding paper like a letter Z), the user may want to make the orientation of the image formed on the front and the orientation of the image formed on the back different about Z-folded paper.

At this time, it is assumed that the desired result is not produced on the Z-folded paper according to the preview image generated by the image processing apparatus 1 of the embodiment. In this case, with the page formed on the Z-folded paper as an exception page, specification of performing rotation processing of the page image may be contained.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The exemplary embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. An image processing apparatus comprising:
an acceptance section that accepts a plurality of image data which are objects of image formation processing, and instruction description in which at least one instruction of image formation processing performed to the accepted image data, and instruction of at least one attendant processing to be performed accompanying the image formation processing are described;
an acquisition section that acquires setting information for representing setting of an image formation apparatus for executing the image formation processing;
an instruction generation section that generates at least one processing instruction based on the instruction description, the accepted image data, and the setting information, wherein the processing instruction is generated for image data to which same image formation processing and same attendant processing are to be performed; and
a sending section that sends the processing instruction to the image formation apparatus.

2. The image processing apparatus as claimed in claim 1, wherein the acquisition section acquires the setting information from the image formation apparatus when the instruction generation section generates the processing instruction.

3. The image processing apparatus as claimed in claim 1 or 2, wherein the instruction generation section controls not to generate the processing instruction while at least a part of the plurality of image data is not accepted.

4. The image processing apparatus as claimed in any one of claims 1 to 3, further comprising a checking section that checks whether the processing instruction satisfies a condition for enabling the image formation processing, and outputs a result of the checking.

5. An image processing system comprising:
an image formation apparatus that forms an image on a medium and processes the medium on which the image is formed;
an output apparatus that outputs instruction description in which at least one instruction of image formation processing performed to image data which is an object of the image formation processing, and instruction of at least one attendant processing to be performed accompanying the image formation processing are described;
an acceptance section that accepts the instruction description and the image data ;
an acquisition section that acquires setting information for representing setting of the image formation apparatus;
an instruction generation section that generates at least one processing instruction based on the instruction description, the accepted image data, and the setting information, wherein the processing instruction is generated for image data to which same image formation processing and same attendant processing are to be performed; and
a sending section that sends the processing instruction to the image formation apparatus,
the image formation apparatus forming the image on the medium and processes the medium on which the image is formed, based on the processing instruction.

6. The image processing system as claimed in claim 5, wherein the image formation apparatus comprises a post-processor that performs the attendant processing to a medium on which an image of the image data is formed.

7. The image processing system as claimed in claim 5 or 6, wherein the acquisition section acquires the setting information from the image formation apparatus when the instruction generation section generates the processing instruction.

8. The image processing system as claimed in any one of claims 5 to 7, wherein the instruction generation section controls not to generate the processing instruction while at least a part of the plurality of image data is not accepted.

9. The image processing system as claimed in any one of claims 5 to 8, further comprising a checking section that checks whether the processing instruction satisfies a condition for enabling the image formation processing, and outputs a result of the checking.

10. An image processing program for causing a computer to perform a process for processing an image, the process comprising:
accepting a plurality of image data which are objects of image formation processing, and instruction description in which at least one instruction of image formation processing performed to the accepted image data, and instruction of at least one attendant processing to be performed accompanying the image formation processing are described;
acquiring setting information for representing setting of an image formation apparatus for executing the image formation processing;
generating at least one processing instruction based on the instruction description, the accepted image data, and the setting information, wherein the processing instruction is generated for the image data to which same image formation processing and same attendant processing are to be performed; and
sending the processing instruction to the image formation apparatus.
